# EUROPÄISCHE PATENTANMELDUNG

(11) **EP 0 666 196 A2**
(43) Veröffentlichungstag der Anmeldung: **09.08.1995**
(21) Anmeldenummer: 95100586.7
(22) Anmeldetag: 18.01.1995
(51) Int. Cl.: B60R 1/10, B60R 1/00

(54) **Frontlenker-Lastkraftwagen mit einer optischen Einrichtung**

(30) Priorität: 05.02.1994 DE 4403613; 22.12.1994 DE 4446124
(71) Anmelder: MAN Nutzfahrzeuge Aktiengesellschaft, 80976 München (DE)
(72) Erfinder: Seidl, Anton, D-85241 Hebertshausen (DE); Sanhieter, Josef, D-86558 Hohenwart/Paar (DE)

(57) **Zusammenfassung**

Bei einem Frontlenker-Lastkraftwagen (10) wird eine optische Einrichtung vorgeschlagen, bei der ein Spiegel (30), ein Prisma (33), eine Fresnellinse oder ein reflektierendes Windleitschild (20', 22) an geeigneter Stelle der Umrandung (4 bis 7) der Frontscheibe (3) des Fahrzeuges angeordnet ist. Damit kann eine gute Einsicht auch in den unmittelbaren Frontbereich vor dem Fahrzeug sichergestellt werden, ohne dabei die zulässige Außenperipherie des Fahrzeuges zu überschreiten.

## Beschreibung

Die Erfindung bezieht sich auf einen Frontlenker-Lastkraftwagen mit einer optischen Einrichtung an der Frontpartie des Fahrerhauses, mittels der der Bereich vor dem Fahrzeug vom Fahrer aus einsehbar ist.

Ein Fahrzeug dieser Art ist aus der DE 42 10 046 A1 bekannt. Darin ist ein Fahrzeug mit einem Zusatzspiegel beschrieben, der mittig im Innenraum des Kraftfahrzeuges im Bereich der oberen Begrenzung der Windschutzscheibe angeordnet ist. Mit einem derartigen Spiegel wird die Sicht im Frontbereich des Fahrzeuges für den Fahrer erweitert, jedoch verbleibt nach wie vor ein vom Fahrer nicht einsehbares Totwinkelgebiet im unmittelbaren Frontbereich des Fahrzeuges.

Ein System mit dem der gesamte Frontbereich des Fahrzeuges für den Fahrer einsehbar ist, ist aus der DE 30 50 617 C2 bekannt. Dieses bekannte System weist einen ersten Spiegel auf, der an einem die Fahrerhausfrontweit überragenden Gestell befestigt ist, und einen zweiten der mit dem ersten zusammenwirkt. Der zweite Spiegel ist im Fahrerhaus angeordnet. Eine derartige Anordnung eines Außenspiegels ist jedoch für Straßenfahrzeuge unzulässig.

Der Erfindung liegt die Aufgabe zugrunde, eine optische Einrichtung für ein Fahrzeug der eingangs genannten Art zu schaffen, mit dem die Einsicht auch in den unmittelbaren Frontbereich vor dem Fahrzeug sichergestellt ist.

Die Aufgabe wird erfindungsgemäß mit den Merkmalen des Anspruches 1 gelöst.

Eine derartige optische Einrichtung stellt zum einen durch ihre Außenlage eine vollständige Einsicht in den Frontbereich des Fahrzeuges sicher, ohne dabei die zulässige Außenperipherie des Fahrzeuges überschreiten zu müssen.

Gemäß einer Ausgestaltung der Erfindung kann in einer fertigungstechnisch einfachen Weise am oberen Teilbereich der Umrandung der Frontscheibe ein Spiegel vorgesehen werden. Dieser kann mittig oder seitlich versetzt angebracht sein. Es ist natürlich auch möglich, mehrere Spiegel so anzubringen, daß der Fahrer von seinem Fahrersitz aus einen gewünschten, erweiterten Bereich vor dem Fahrzeug einsehen kann.

Um bei den oben angeordneten Spiegeln keine ungünstigen Strömungsverhältnisse zu erzeugen, wird der oder die Spiegel jeweils mit einem strömungsgünstigen Spiegelhaus versehen. Bei mehreren Spiegeln kann ein gemeinsames Spiegelhaus vorgesehen werden.

Bei Fahrzeugen mii einer äußeren Sonnenblende im oberen Dachkantenbereich des Fahrerhauses oder mit einem dort angeordneten Windleitschild wird der oder die oberen Spiegel vorzugsweise in dem Windleitschild bzw. der Sonnenblende integriert. So kann beispielsweise der Spiegel in einem in der Sonnenblende integrierten Spiegelhaus angebracht werden.

Gemäß einer bevorzugten Ausführung der Erfindung ist die Sonnenblende bzw. das Windleitschild auf der der Straße zugewandten Seite zumindest in Teilbereichen direkt spiegelig ausgebildet. Hierfür ist beispielsweise das Windleitschild oder die Sonnenblende zur Bildung einer Spiegelfläche entsprechend ausgeformt, deren Oberfläche eine reflektierende Schicht oder dergleichen aufweist.

Diese erfindungsgemäße Ausführung hat den Vorteil, daß mit einem Bauteil gleichzeitig drei Funktionen erfüllt werden, nämlich die gewünschte optische Einrichtung darzustellen, als Sonnenblende zu dienen und günstige Strömungsverhältnisse zu realisieren, wobei zudem für die Einsicht in den Frontbereich kein zusätzliches Bauteil benötigt wird.

Diese Ausführung hat ferner den Vorteil, daß sie mit fertigungstechnisch einfachen Mitteln eine flexible Ausgestaltung eines optimalen optischen Systems ermöglicht, wobei ein oder mehrere Spiegelflächen so vorgesehen werden, daß sie einerseits ein gutes Sichtfeld ergeben und andererseits den Fahrer bei der Fahrt, z.B. durch unerwünschte Reflexionen, nicht stören.

Je nach Formgebung des Fahrerhauses, insbesondere des Frontteiles des Fahrerhauses, wird die optische Einrichtung entsprechend anzubringen sein. Bei Fahrerhäusern, z. B. mit relativ schräger Windschutzscheibe, wird gemäß einer anderen Ausgestaltung der Erfindung vorgeschlagen, an zumindest an einem seitlichen Teilbereich der Umrandung der Frontscheibe, vorzugsweise im mittleren oder unteren Abschnitt desselben, einen Spiegel entsprechend anzubringen, um den bisher vom Fahrer nicht einsehbaren Totwinkelbereich im unmittelbaren Frontbereich des Fahrzeuges einsichtig zu machen.

Für derartige seitliche Spiegel können seitliche Windleitschilde so ausgebildet werden, daß sie zumindest im oberen Bereich als Spiegelhaus dienen. Auch in einem derartigen Fall kann das Windleitschild direkt mit einer spiegeligen Fläche ausgebildet werden.

Gemäß einer vorteilhaften Ausgestaltung ist im Umfeld des unteren Teilbereiches der Umrandung der Frontscheibe eine optische Einrichtung in Form von Fresnelllinsen oder Prismen vorgesehen. Diese haben den Vorteil, daß sie wenig aus der Fahrzeugkontur hervorragen. Mit ihnen können die von der Straße im unmittelbaren Frontbereich des Fahrzeuges ausgehenden Strahlen gleich zum Auge des Fahrers umgelenkt werden. Hierbei wird ein Prisma oder eine Fresnellinse oder mehrere Einheiten derselben entlang des unteren Teilbereiches der Umrandung angeordnet. Es ist durchaus möglich, die gesamte Länge des unteren Teilbereiches mit einer durchgehenden Fresnellinse bzw. einem durchgehenden Prisma zu versehen. Prismen oder Fresnellinsen haben ferner den Vorteil, daß sie direkt in die Frontscheibe integriert werden können, das heißt, sie werden in der Frontscheibe im unteren Bereich direkt eingeformt.

Je nach geometrischen Verhältnissen des Fahrerhauses lassen sich die Prismen oder Fresnellinsen entsprechend ausgestalten und gegebenenfalls mit reflektierenden Flächen ergänzen.

Bei den Spiegeln werden ebenfalls, je nach Anordnung und Ausgestaltung des Fahrzeuges, ebene Spiegelflächen oder konvex gewölbte Spiegel verwendet. Im Falle der Verwendung von seitlichen Anfahrspiegeln, die beifahrerseitig außen oberhalb der Seitenscheibe angeordnet sind, wird man vorzugsweise den oder die frontseitigen optischen Einrichtungen so auslegen, daß deren Sichtfeld an das Sichtfeld des Anfahrspiegels angrenzen oder dieses überlappen, um jeglichen Totwinkel zu vermeiden.

In der Zeichnung sind Ausführungsbeispiele der Erfindung schematisch dargestellt. Es zeigen:
- Fig. 1 bis 3: ein erstes Ausführungsbeispiel in unterschiedlichen Ansichten,
- Fig. 4 und 5: je ein weiteres Ausführungsbeispiel,
- Fig. 6: einen Schnitt aus Fig. 5 und
- Fig. 7: ein Detail aus Fig. 6.

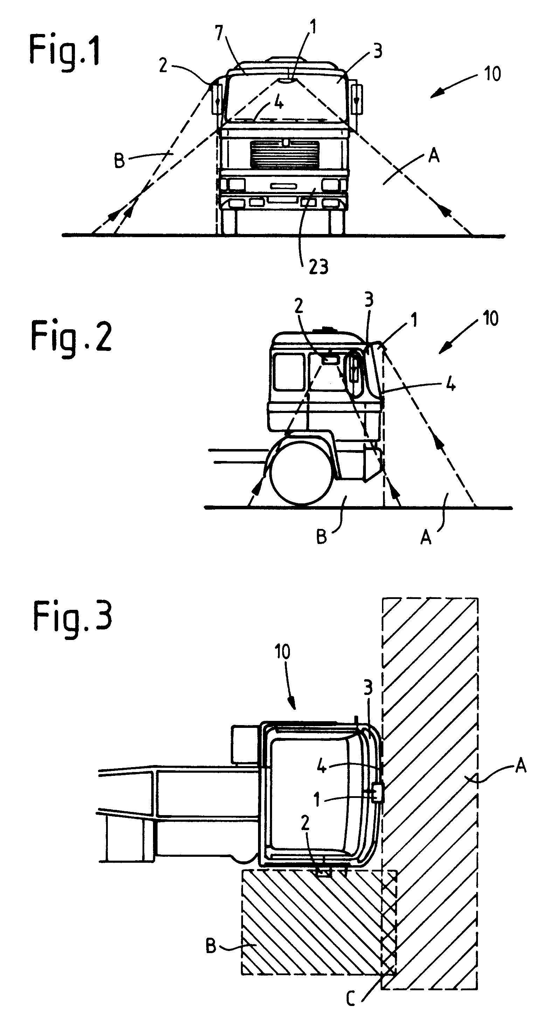

In Fig. 1 ist die Frontansicht eines Frontlenker-Lastkraftwagens 10 dargestellt, der im oberen Bereich 7 der Umrandung 4, 5, 6, 7 der Windschutzscheibe 3 einen konvexen Spiegel 1 hat. Dieser Spiegel 1 ist so angeordnet, daß sein Sichtfeld A vom Bereich unmittelbar vor dem Stoßfänger 23 des Fahrzeuges 10 bis zur Sichtlinie des direkten Einsichtsbereichs reicht. Damit kann der Fahrer von seinem Fahrersitz aus, insbesondere beim Anfahren und Rangieren, diesen unmittelbaren Bereich vor dem Fahrzeug gleichzeitig einsehen. Durch die konvexe Ausgestaltung des Frontspiegels 1 erstreckt sich das Sichtfeld A über die Fahrzeugbreite hinaus.

Fig. 2 zeigt eine Seitenansicht des Fahrerhauses nach Fig. 1, bei dem an der Beifahrerseite ein seitlicher Anfahrspiegel 2 oberhalb des Seitenfensters angebracht ist. Der Sichtbereich B des seitlichen Anfahrspiegels 2 überdeckt in einem Bereich C den Sichtbereich A, wie es in Fig 3 gezeigt ist. Je nach Auslegung des Frontspiegels 1 und des seitlichen Anfahrspiegels 2 werden die Sichtbereiche A und B überdeckend oder gerade angrenzend sein.

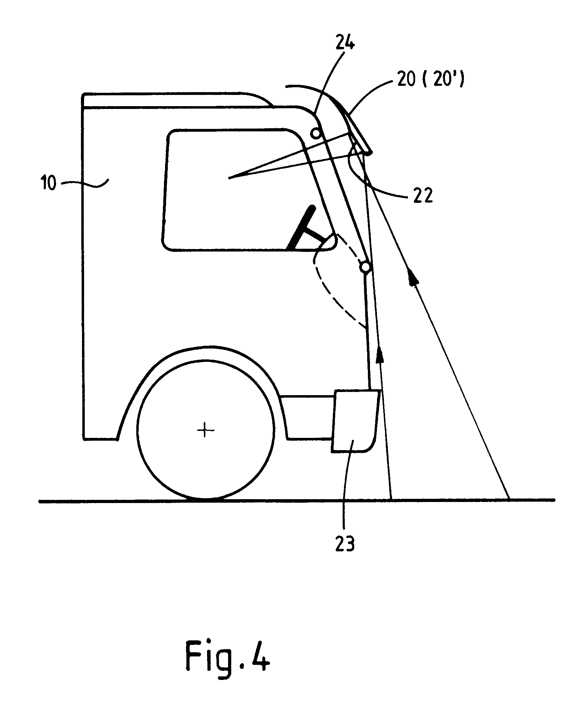

Anstelle eines mittig angeordneten Frontspiegels 1 ist die Verwendung von mehreren, oder gegebenenfalls auch außermittig angeordneten Spiegeln möglich. Die Anbringung des bzw. der Frontspiegel erfolgt an der Frontscheibe 3 oder oberhalb dieser - wie in Fig.4 gezeigt - an der oberen Fahrerhauskante 24 oder an einer äußeren Sonnenblende 20 bzw. einem vorderen oberen Windleitschild 20. Der bzw. die Spiegel sind in einem aerodynamischen Spiegelhaus, das nicht gezeigt ist, untergebracht.

Fig. 4 stellt eine Variante dar, bei der die Sonnenblende 20 oder das Windleitschild 20' an der unteren, der Straße zugewandten Seite 22 reflektierend ausgebildet ist. Dies kann in unterschiedlicher Weise geschehen. Eine günstige Ausführung besteht in einer Sonnenblende 20 bzw. einem Windleitschild 20' mit eingeformtem Spiegelhaus, in das ein oder mehrere Spiegel unter Beachtung einer strömungsgünstigen Form eingebracht werden. Das hat den Vorteil, daß bei Zerstörung eines Spiegels dieser probemlos ausgetauscht werden kann.

Es ist natürlich auch möglich, die Oberfläche 22 der Sonnenblende 20 bzw. des Windleitschildes 20' direkt als Reflexionsschicht 22 auszubilden, wobei diese Reflexionsschicht 22 abschnittsweise vorgesehen ist oder sich über die gesamte Bauteilbreite der Sonnenblende bzw. des Windleitschildes 20, 20' erstreckt.

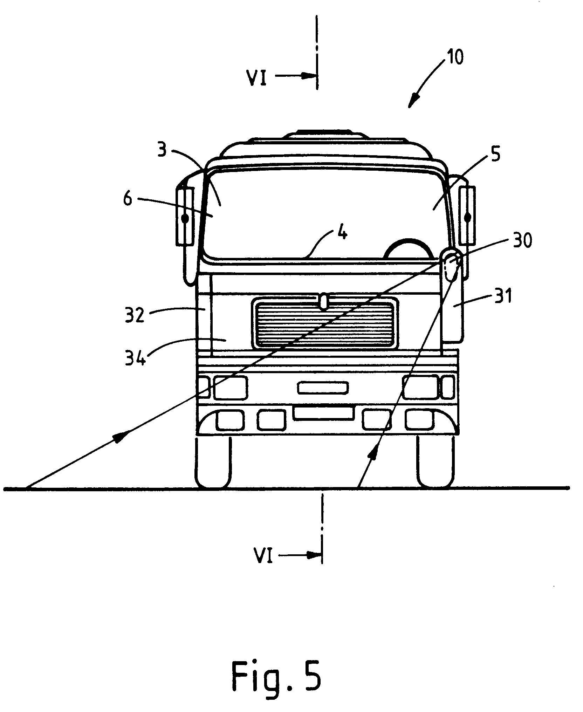

Gemäß Fig. 5 ist eine Ausführung vorgesehen, bei der an der linken unteren Ecke der Frontscheibe 3 ein Spiegel 30 angeordnet ist, der sich hinter einem modifizierten Windleitschild 31 befindet. Wie bei der Ausführung gemäß Fig. 4 kann auch hier anstelle eines getrennten Spiegels das Windleitschild 31 so modifiziert sein, daß es im oberen hinteren Bereich ein Spiegelhaus bildet oder zur Bildung einer Reflexionsschicht entsprechend geformt ist. Das Windleitschild 32 der Beifahrerseite kann bei Bedarf ebenfalls so modifiziert werden und zur Bildung einer Reflexionsschicht bzw. zur Aufnahme eines Spiegels herangezogen werden.

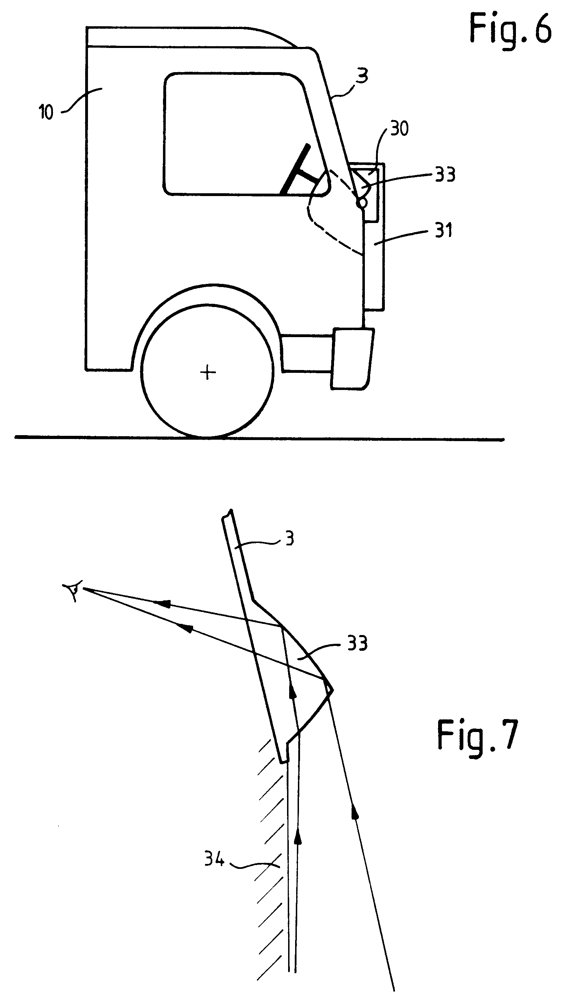

Ein Längsschnitt des Fahrzeuges gemäß der Linie VI - VI aus Fig. 5 ist in Fig. 6 gezeigt, bei der die Innenseite des Windleitschildes 31 sichtbar ist, in dem der Spiegel 30 behaust ist.

Eine weitere Ausführung besteht in einem Prisma 33, das am unteren Teilbereich 4 der Umrandung 4, 5, 6, 7 der Frontscheibe 3 angeordnet ist. In den Figuren 6 und 7 ist eine derartiges Prisma 33 im Querschnitt gezeigt. Anstelle eines Prismas ist auch eine Fresnellinse möglich. Das Prisma 33 bzw. die Fresnellinse kann sich über die Breite der Frontscheibe 3 erstrecken. Alternativ ist es möglich, die Anbringung von einem oder mehreren Prismen 33 oder Fresnellinsen in hierfür geeigneten Abschnitten der Frontscheibe 3 vorzusehen.

In Fig. 7 ist eine Ausführung gezeigt, bei der ein oberhalb einer Fahrerhaus-Frontwand 34 angeordnetes Prisma 33 direkt aus der Frontscheibe 3 herausgeformt ist. Analog kann eine Fresnellinse in diesem Bereich in die Frontscheibe 3 eingebracht werden. Je nach fahrzeugseitiger Anforderung wird das Prisma 33 oder eine Fresnellinse so ausgelegt, daß eine Brechung und eine Reflexion erfolgt. Bei einer derartigen Ausführung kann ein Prisma bzw. eine Fresnellinse gegebenenfalls mit einem oder mehreren Spiegeln kombiniert werden und eine gemeinsame Baueinheit bilden.

## Patentansprüche

1. Frontlenker-Lastkraftwagen mit einer optischen Einstellung an der Frontpartie des Fahrerhauses, mittels der der Bereich vor dem Fahrzeug vom Fahrer aus einsehbar ist, dadurch gekennzeichnet, daß außen am Fahrzeug mindestens ein optisches Element im Umfeld der Umrandung (4 bis 7) der Frontscheibe (3) vorgesehen ist.

2. Lastkraftwagen nach Anspruch 1, dadurch gekennzeichnet, daß im oberen Teilbereich (7) der Umrandung (4 bis 7) als optisches Element mindestens ein Spiegel (1) angeordnet ist, derart, daß der Bereich vor dem Fahrzeug vom Fahrer aus direkt einsehbar ist.

3. Lastkraftwagen nach Anspruch 2, dadurch gekennzeichnet, daß der Spiegel (1) ein strömungsgünstiges Spiegelhaus hat.

4. Lastkraftwagen nach Anspruch 3, dadurch gekennzeichnet, daß das Spiegelhaus an einer äußeren Sonnenblende (20) bzw. Windleitschild (20') integriert ist.

5. Lastkraftwagen nach Anspruch 1, mit einer äußeren Sonnenblende, dadurch gekennzeichnet, daß die der Straße zugewandte Seite der Sonnenblende (20, 20') mindestens teilweise als spiegelnde Fläche (22) ausgebildet ist.

6. Lastkraftwagen nach Anspruch 1, dadurch gekennzeichnet, daß im mittleren oder unteren Abschnitt des seitlichen Teilbereiches (5, 6) der Umrandung (4 bis 7) als optisches Element ein Spiegel (30) fahrer- und/oder beifahrerseitig angeordnet ist.

7. Lastkraftwagen nach Anspruch 6, dadurch gekennzeichnet, daß der Spiegel (30) in einem seitlichen Windleitschild (31 bzw. 32) integriert ist, oder daß ein ein seitliches Windleitschild so ausgebildet ist, daß es eine spiegelige Innenfläche aufweist.

8. Lastkraftwagen nach Anspruch 1, dadurch gekennzeichnet, daß im Umfeld des unteren Teilbereiches (4) der Umrandung (4 bis 7) mindestens eine Fresnellinse oder mindestens ein Prisma (33) vorgesehen ist, und daß die Fresnellinse oder das Prisma (33) in die Frontscheibe (3) integriert ist.

9. Lastkraftwagen nach Anspruch 8, dadurch gekennzeichnet, daß die Fresnellinse bzw. das Prisma (33) sich nahezu über die gesamte Länge des unteren Teilbereiches (4) der Umrandung (4 bis 7) erstrecken.

10. Lastkraftwagen nach einem oder mehreren der vorangegangenen Ansprüche, dadurch gekennzeichnet, daß das Sichtfeld (A) der optischen Einrichtung (1, 22, 30, 33) das Sichtfeld (B) eines seitlichen, beifahrerseitigen Anfahrspiegels (2) derart ergänzt, daß es an dieses zumindest angrenzt und/oder dieses bereichsweise überdeckt (C).
